# EUROPÄISCHE PATENTSCHRIFT

(11) **EP 1 210 384 B1**
(45) Veröffentlichungstag und Bekanntmachung des Hinweises auf die Patenterteilung: **24.11.2004**
(21) Anmeldenummer: 00958395.6
(22) Anmeldetag: 08.08.2000
(51) Int. Cl.: C08G 77/50, C09D 183/14

(54) **ANORGANISCHE BESCHICHTUNGSZUSAMMENSETZUNG, EIN VERFAHREN ZU DEREN HERSTELLUNG SOWIE DEREN VERWENDUNG**
INORGANIC COATING COMPOSITION, A METHOD FOR PRODUCING SAME AND THE USE THEREOF
COMPOSITION DE REVETEMENT INORGANIQUE, PROCEDE POUR LA PRODUIRE ET SON UTILISATION

(30) Priorität: 20.08.1999 DE 19939152; 15.06.2000 DE 10028847
(43) Veröffentlichungstag der Anmeldung: 05.06.2002
(73) Patentinhaber: Bayer MaterialScience AG, 51368 Leverkusen (DE)
(72) Erfinder: MECHTEL, Markus, D-50937 Köln (DE); PÜTZ, Wolfgang, D-46569 Hünxe (DE); SCHMALSTIEG, Lutz, D-50676 Köln (DE); MUNDSTOCK, Holger, D-42929 Wermelskirchen (DE); SONNTAG, Michael, D-51519 Odenthal (DE)
(86) Internationale Anmeldenummer: PCT/EP2000/007670
(87) Internationale Veröffentlichungsnummer: WO 2001/014493

(56) Entgegenhaltungen:
- EP-A- 0 743 313
- EP-A- 0 744 443
- EP-A- 0 787 734

## Beschreibung

Die vorliegende Erfindung betrifft anorganische Beschichtungszusammensetzungen auf Basis cyclischer Carbosiloxane, anorganischer Polykondensate und α,ω-funktioneller linearer Oligosiloxane sowie ein Verfahren zu deren Herstellung und deren Verwendung.

Anorganische Beschichtungen auf Siloxanbasis sind seit langem Stand der Technik und werden in vielen Bereichen wegen ihrer Eigenschaften geschätzt. Siliconharz-Lacke, die im wesentlichen aus statistisch verteilten T-, D-, M- und zum Teil auch aus Q-Einheiten zusammengesetzt sind, werden aus den entsprechenden Chlorsilanen über die direkte oder indirekte Hydrolyse hergestellt. Der Hydrolyse der Silane zu Oligosiloxanen nachgeschaltet ist die Kondensation zu Organopolysiloxanharzen, das sogenannte "Bodying". Die Herstellverfahren werden beispielsweise in W. Noll, Chemie und Technologie der Silicone, VCH-Verlag, 1968 und in *Chemie in Unserer Zeit*, **23**, (1989), 86-99 beschrieben. Dort sind auch Technologie und Eigenschaften von Siliconharzen zusammengefasst. Insbesondere mit reinen Methylsiliconharzen können harte, mechanisch belastbare, allerdings spröde Beschichtungen hergestellt werden. Um die Endeigenschaften zu erreichen, müssen Siliconharz-Lacke bei Temperaturen von 180 bis 230°C eingebrannt werden.

Im Gegensatz zur Siliconharzherstellung wird beim Sol-Gel Verfahren durch Hydrolyse und Polykondensation von Alkoxysilanen ohne anschließendes "Bodying" ein Oligosiloxan-Sol hergestellt. Die Sole haben im Vergleich zu Siliconharzen eine viel größere Anzahl reaktiver SiOH bzw. SiOR-Gruppen und besitzen durch einen hohen Anteil an Q-Einheiten eine höhere Vernetzungsdichte. Sol-Gel Beschichtungssysteme haben die bekannten positiven Eigenschaften der Siliconharze, wie hohe Temperaturbeständigkeit, Beständigkeit gegen Lösemittel und viele Gebrauchsflüssigkeiten, Antihaftwirkung und Wetterstabilität. Aufgrund der höheren Reaktivität und Vernetzungsdichte können Sol-Gel Beschichtungen bei niedrigeren Temperaturen von ca. 80° bis ca. 130°C gehärtet werden und übertreffen Siliconharz-Lacke in Härte und mechanischer Stabilität.

Der Nachteil von kondensationsvemetzenden Sol-Gel Beschichtungssystemen ist deren niedriger Festkörpergehalt bzw. deren hoher VOC-Gehalt. Der Festkörpergehalt von Sol-Gel Lacken liegt in der Regel zwischen 10 und 50 Gew.-%, meistens bei maximal. 30 Gew.-%. Von der Beschichtungsindustrie wird jedoch zunehmendem Maße, teilweise auch aufgrund gesetzlicher Vorschriften, die Reduzierung flüchtiger organischer Verbindungen (VOC) gefordert. Ein weiterer Nachteil der bestehenden Sol-Gel Beschichtungssysteme ist deren Neigung zur Rissbildung aufgrund geringer Flexibilität. Sie lassen sich deshalb auch nur in geringen Schichtdicken von wenigen µm applizieren. Für viele Anwendungen, beispielsweise als Graffitischutz für Gebäude sowie für Groß- und Schienenfahrzeuge, wäre es außerdem vorteilhaft, wenn anorganische Sol-Gel Systeme ihre Eigenschaften schon bei Raumtemperaturhärtung erreichen würden.

Es besteht daher ein Bedarf an anorganischen Sol-Gel Systemen ohne die oben genannten Nachteile, aber mit den genannten Vorteilen.

Es ist Stand der Technik, die Flexibilität und Härte von Sol-Gel Lacke in gewissen Grenzen über die Art und die Mengenverhältnisse der zur Herstellung der Beschichtungszusammensetzung eingesetzten Silane und Additive zu variieren. In US-A 4 624 870 wird Methyltrialkoxysilan mit kolloidalem SiO₂ hydrolysiert. Die Eigenschaften werden über das Verhältnis CH₃SiO_{3/2}- zu SiO₂₋ Einheiten kontrolliert. US-A 3 986 997, US-A 4 027 073 und EP-A 358 011 beschreiben die (Co)Hydrolyse organofunktioneller Alkyltrialkoxysilane, wie Methyltrialkoxysilan, Glycidyloxypropyltrialkoxysilan oder Methacryloxypropyltrialkoxysilan und Tetraethoxysilan (TEOS) sowie gegebenenfalls anorganischen Nanoteilchen. Die Eigenschaften bei diesen Systemen können über Art und Anteil der organofunktionellen Silane an der Gesamtzusammensetzung gesteuert werden. In US-A 4 324 712 wird die Neigung zur Rissbildung der Beschichtungszusammensetzung durch Zusatz von 0,5 bis 5 % eines linearen funktionellen Oligosiloxans zum (Co)Hydrolysat aus Alkyltrialkoxysilan und kolloidalem SiO₂ reduziert. In PCT 98/52992 und PCT 94/06 807 werden multifunktionelle, bevorzugt cyclische Organosiloxane zur Modifizierung anorganischer Beschichtungen eingesetzt.

Stand der Technik ist auch die hydrophobe und/oder oleophobe Modifizierung der zuvor beschrieben Beschichtungszusammensetzungen durch Zusatz fluorhaltiger Komponenten, wobei fluorhaltige Alkoxysilane bevorzugt werden. Solche Beschichtungen zeichnen sich durch gute Antihafteigenschaften aus und werden beispielsweise in DE-A 41 18 184 und in WO 99 03 941 beschrieben.

Alle dem Stand der Technik nach bekannten kondensationsvernetzenden Sol-Gel Systeme weisen jedoch mindestens einen der anfangs genannten Nachteile auf, was eine breite Anwendung in vielen Bereichen ausschließt.

Aufgabe der vorliegenden Erfindung war es daher, eine anorganische Sol-Gel Beschichtung bereitzustellen, die die zuvor beschriebenen Nachteile nicht aufweist. Eine weitere Aufgabe der Erfindung bestand darin, ein geeignetes Verfahren zur Herstellung der erfindungsgemäßen Beschichtungszusammensetzung bereitzustellen.

Der Erfindung liegt die überraschende Beobachtung zugrunde, dass durch die Kombination cyclischer Carbosilane und/oder Carbosiloxane, anorganischer Polykondensate und α,ω-funktioneller linearer Oligosiloxane anorganische Beschichtungszusammensetzungen erhältlich sind, welche die der Erfindung zugrunde liegende Aufgabe erfüllen. Die erfindungsgemäße Beschichtungszusammensetzung weist einen Lösemittelgehalt von maximal 50 Gew.-%, bevorzugt von maximal 40 Gew.-% auf. Sie kann rissfrei in Trockenschichtdicken von deutlich mehr als 30 µm appliziert werden und härtet bei Raumtemperatur. Die ausgehärteten Filme sind transparent und flexibel. Sie sind hydrophob und besitzen gute Antihafteigenschaften.

Gegenstand der Erfindung sind somit Beschichtungszusammensetzungen, enthaltend
I) ein multifunktionelles Carbosilan und /oder -siloxan der allgemeinen Formel (I),

   W[(CH₂)ₘSiR¹ ₙX₍₃₋ₙ₎]ₚ (I)

   und/oder dessen (Teil)kondensationsprodukt mit
   - R¹: C₁-C₁₈-Alkyl und/oder C₆-C₂₀-Aryl, wobei R¹ innerhalb des Moleküls gleich oder ungleich sein kann,
   - X: ein Rest ausgewählt aus der Gruppe OH, C₁-C₄-Alkoxy, C₆-C₂₀-Aryloxy, C₁-C₆-Acyloxy, bevorzugt OH, Methoxy oder Ethoxy,
   - n: 0 bis 2
   - m: 2 bis 6
   - p: ganze Zahl ≥ 2 und
   - W: entweder ein lineares, cyclisches oder verzweigtes Silan oder Siloxan
II) ein Polykondensationsprodukt einer oder mehrerer hydrolysierbarer Verbindungen der allgemeinen Formel (II)

   R² ₐM(Y)_{(b)} (II)

   mit
   - M: Si, B, Al, Ti, Zr, V, Zn, bevorzugt Si
   - R²: gleiche oder verschiedene nicht hydrolysierbare C₁ - C₁₄-Alkyl- oder C₆ - C₂₀-Arylreste, die mit mindestens einem Mitglied der Gruppe O, N, S, P substituiert sein können,
   - Y: eine hydrolysierbare Gruppe, bevorzugt C₁ - C₈ -Alkoxy oder C₂-C₈-Acyloxy, ganz besonders bevorzugt C₁ - C₂-Alkoxy,
   - a: 0 bis 3 bevorzugt 0 oder 1
   - b: 1 bis 4, wobei a + b gleich 3 oder 4.
   und einem Festkörpergehalt von mindestens 40 Gew.-%, bevorzugt von mindestens 50 Gew.-% in einem OH-funktionellen Lösemittel.
III) ein α,ω-hydroxyfunktionelles Polydimethylsiloxan der allgemeinen Formel (III) 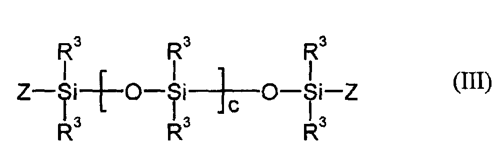 mit
   - Z: Hydroxy
   - R³: Methyl
   - c: 1 bis 60, bevorzugt 3 bis 25,
   mit einem OH-Gehalt von 0,8 bis 9 %,
IV) Katalysatoren, ausgewählt aus der Gruppe der sauren, basischen oder Metall-Katalysatoren, bevorzugt aus der Gruppe der Säuren, wie Salzsäure, Schwefelsäure, p-Toluolsulfonsäure, Trifluoressigsäure, Trifluormethansulfonsäure, Essigsäure oder Ameisensäure,
   sowie gegebenenfalls
V) anorganische Füllstoffe und/oder anorganische Nanoteilchen sowie
VI) Hilfsstoffe ausgewählt aus der Gruppe anorganischer und/oder organischer Pigmente, Lackadditive, Haftmittel, Fungizide, Bakterizide, Stabilisatoren oder Inhibitoren.

Im Sinne der Erfindung geeignete multifunktionelle Carbosilane und oder ―siloxane der allgemeinen Formel (I) sind Silane der allgemeinen Formel (IV)

R⁴ ₄₋ₚSi[(CH₂)ₘSiR¹ ₙX₃₋ₙ]ₚ (IV)

oder deren (Teil)kondensationsprodukt,
mit
- R¹: C₁ - C₁₈-Alkyl und/oder C₆ - C₂₀-Aryl, wobei R¹ innerhalb des Moleküls gleich oder ungleich sein kann,
- R⁴: C₁ - C₁₈ Alkyl und/oder C₆ - C₂₀-Aryl,
- X: ein Rest ausgewählt aus der Gruppe OH, C₁ - C₄-Alkoxy, C₆ - C₂₀-Aryloxy, C₁ - C₆-Acyloxy, bevorzugt OH, Methoxy oder Ethoxy,
- m: 2 bis 6
- n: 0 bis 2 und
- p: 4, 3 oder 2.

In einer weiteren Ausführungsform der Erfindung sind multifunktionelle Carbosilane und/oder ―siloxane der allgemeinen Formel (I) Siloxane, in denen W zusammengesetzt ist aus mindestens zwei Bausteinen, ausgewählt aus monofunktionellen Einheiten M oder difunktionellen Einheiten D sowie in geringem Maße zusätzlich trifunktionelle Einheiten T oder tetrafunktionelle Einheiten Q und/oder deren Kondensations- und/oder (Teil)kondensationsprodukte.

Die erfindungsgemäßen Siloxane weisen vorzugsweise ein Molekulargewicht (Zahlenmittel) zwischen 300 - 5000 auf.

In einer bevorzugten Ausführungsform der Erfindung ist das multifunktionelle Carbosilan und/oder ―siloxan der allgemeinen Formel (I) ein cyclisches Siloxan der allgemeinen Formel (V) 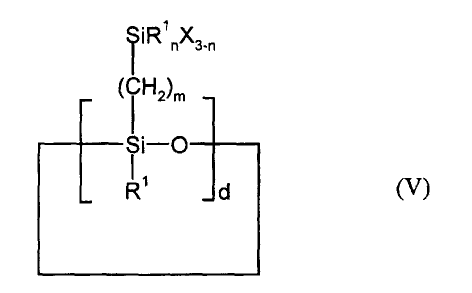 und/oder dessen (Teil)kondensationsprodukt mit
- R¹: C₁ - C₁₈-Alkyl und/oder C₆ - C₂₀-Aryl, wobei R¹ innerhalb des Moleküls gleich oder ungleich sein kann,
- X: ein Rest ausgewählt aus der Gruppe OH, C₁ - C₄-Alkoxy, C₆ - C₂₀-Aryloxy, C₁ - C₆-Acyloxy, bevorzugt OH, Methoxy oder Ethoxy,
- d: 3 bis 6, bevorzugt 4
- n: 0 bis 2
- m: 2 bis 6.

Ein einer besonders bevorzugten Ausführungsform der erfindungsgemäßen Beschichtungszusammensetzung ist das multifunktionelle Carbosilan und /oder -siloxan eine Verbindung der Formel (VI) und/oder (VII) oder deren (Teil)kondensationsprodukt. 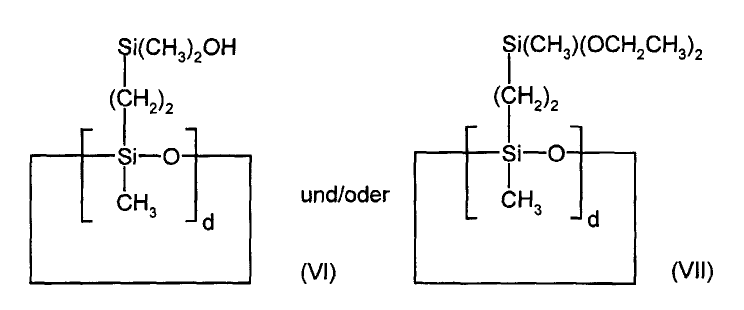 mit d gleich 3 bis 6, bevorzugt 4.

Unter Kondensations- bzw. (Teil)Kondensationsprodukten sind Oligomere oder Polymere zu verstehen, die aus mindestens zwei Molekülen der allgemeinen Formel (I) nach gegebenenfalls Hydrolyse und anschließender Kondensation der Gruppe X unter Ausbildung einer Si-O-Si Bindung entstehen.

In der erfindungsgemäßen Beschichtungszusammensetzung können auch mehrere multifunktionelle Carbosilane und /oder ―siloxane der allgemeinen Formel (I) enthalten sein.

Hydrolysierbare Verbindungen der allgemeinen Formel (II) sind bevorzugt Alkoxysilane R²ₐSi(Y)_{(b)} (mit a bevorzugt 0 oder 1 und R², Y die zuvor angegebene Bedeutung haben) oder deren Mischungen. Besonders bevorzugte Alkoxysilane sind Tetraethoxysilan, Methyltriethoxysilan und/oder Phenyltriethoxysilan.

Ebenfalls Gegenstand der vorliegenden Erfindung sind Polykondensationsprodukte aus hydrolysierbaren Verbindungen der allgemeinen Formel (II) und eines α,ω-hydroxyfunktionellen Polydimethylsiloxans allgemeinen Formel (III). In diesem Fall werden als hydrolysierbare Verbindungen der allgemeinen Formel (II) bevorzugt Alkoxysilane R²ₐSi(Y)_{(b)} (mit a bevorzugt 0 oder 1 und R², Y die zuvor angegebene Bedeutung haben) oder deren Mischungen, ganz besonders bevorzugt Tetraethoxysilan eingesetzt. Ebenso ist es möglich nur einen Teil des in der Beschichtungszusammensetzung enthaltenen α,ω-hydroxyfunktionellen Polydimethylsiloxans in das Polykondensationsprodukt einzubauen und den restlichen Anteil als separate Komponente zuzusetzen.

Die in der erfindungsgemäßen Beschichtungszusammensetzung enthaltenen Polykondensationsprodukte weisen einen Festkörpergehalt von mindestens 40 Gew.-%, bevorzugt von mindestens 50 Gew.-% auf. Als Lösemittel sind OH-funktionelle Lösemittel mit einem Siedepunkt größer 110°C und einem Flammpunkt größer 30°C bevorzugt. Geeignete Lösemittel sind beispielsweise 1-Butanol, 1-Pentanol, 2-Pentanol, 1-Methoxy-2-propanol oder Diacetonalkohol.

Als Katalysatoren können alle in der Siliconchemie bekannten Kondensationskatalysatoren, wie z.B. in W. Noll, Chemie und Technologie der Silicone, VCH-Verlag, Weinheim, 1968 beschrieben, verwendet werden. Geeignete Katalysatoren sind beispielsweise organische Metallverbindungen, wie carbonsaure Salze, Alkoholate und Phenolate, Komplexverbindungen vom Chelatcharakter, basische Katalysatoren, wie Alkalihydroxide, Amine, Alkalisilanolate, quartäre Ammoniumhydroxide und saure Katalysatoren. Saure Katalysatoren können Lewis-Säuren oder Protonensäuren, wie Salzsäure, Schwefelsäure, p-Toluolsulfonsäure, Trifluoressigsäure, Trifluormethansulfonsäure, Essigsäure oder Ameisensäure sein. Bevorzugt ist der Katalysator eine Säure, besonders bevorzugt *para*-Toluolsulfonsäure. Der Katalysator kann auch als Lösung, bevorzugt im gleichen Lösemittel, das bereits in der Zusammensetzung enthalten ist, eingesetzt werden.

Der erfindungsgemäßen Beschichtungszusammensetzung können auch weitere Komponenten zugesetzt werden. Beispielsweise können als Komponente (V) anorganische Füllstoffe oder anorganische Nanoteilchen zugesetzt werden. Es ist dem Fachmann bekannt, dass durch die Zugabe anorganischer Nanopartikel, wie z.B. Metalloder Halbmetalloxide bzw. Oxidhydrate der Elemente Si, Al oder Ti die mechanischen Eigenschaften von Beschichtungen verbessert werden.

Ebenso können als Komponente (VI) in der Beschichtungstechnologie Komponente (VI) in der Beschichtungstechnologie übliche Hilfsstoffe zugesetzt werden. Übliche Hilfsstoffe sind beispielsweise anorganische und/oder organische Pigmente, Lackadditive, wie Dispergier-, Verlauf-, Verdickungs-, Entschäumungs- und andere Hilfsmittel, Haftmittel, Fungizide, Bakterizide, Stabilisatoren oder Inhibitoren.

Bei der Verwendung der erfindungsgemäßen Beschichtungszusammensetzung beispielsweise als Antihaftschicht zum Schutz vor Meeresbewuchs sind unter üblichen Hilfsstoffen auch die aus dem Stand der Technik bekannten Release bzw. Slip-Additive zu verstehen. Hierbei handelt es sich in der Regel um hydrophobe, nichtfunktionelle Additive, die während der Nutzungsdauer der Beschichtung an die Grenzfläche der Beschichtung diffundieren und dort die Oberflächenspannung herabsetzen. Geeignete Release bzw. Slip-Additive sind beispielsweise Silicone-Öle, organische Öle, Wachse, Parafine oder Vaseline. Es kann selbstverständlich auch ein Gemisch der zuvor genannten Komponenten zugegeben werden.

In einer bevorzugten Ausführungsform der Erfindung enthält die erfindungsgemäße Beschichtungszusammensetzung
I. 20 bis 70 Gew.-% eines multifunktionellen Carbosilans und/oder ―siloxans der allgemeinen Formel (I), bevorzugt einer oder mehrerer Verbindungen der Formel (V) und/oder (VI) und/oder deren (Teil)kondensationsprodukte
II. 10 bis 70 Gew.-% eines Polykondensationsproduktes einer oder mehrerer hydrolysierbarer Verbindungen der allgemeinen Formel (II), bevorzugt mindestens einer hydrolysierbaren Si-Verbindung, ganz besonders bevorzugt von Tetraethoxysilan, und/oder Methyltriethoxysilan und/oder Phenyltriethoxysilan mit einen Festkörpergehalt von mindestens 40 Gew.-%, bevorzugt von mindestens 50 Gew.-% in einem OH-funktionellen Lösemittel, wobei das Polykondensationsprodukt auch α,ω-funktionelle lineare Oligosiloxane enthalten kann,
III. 5 bis 50 Gew.-% eines α,ω-hydroxy-funktionelles Polydimethylsiloxan der allgemeinen Formel (III), wobei dieses ganz oder teilweise in dem Polykondensationsprodukt aus einer oder mehreren hydrolysierbaren Verbindungen der allgemeinen Formel (II) enthalten sein kann,
IV. 0,5 bis 20 Gew.-% einer Katalysatorlösung, bevorzugt *para*-Toluolsulfonsäure, gelöst in einem organischen Lösemittel,
   mit der Maßgabe, dass die Summe der einzelnen Komponenten 100 Gew.-% ergibt, sowie gegebenenfalls
V. anorganische Füllstoffe und/oder anorganische Nanoteilchen sowie
VI. Hilfsstoffe, ausgewählt aus der Gruppe anorganischer und/oder organischer Pigmente, Lackadditive, Haftmittel, Fungizide, Bakterizide, Stabilisatoren oder Inhibitoren.

Das Verhältnis der Komponenten (V) und (VI) zu den Komponenten (I) bis (IV) ist nicht größer als 1 : 1.

Vorteilhaft an der erfindungsgemäßen Beschichtungszusammensetzung ist, dass die in der Beschichtungszusammensetzung mindestens enthaltenen Komponenten (I) bis (IV) in den erfindungsgemäßen Grenzen jedem beliebigen Verhältnis miteinander mischbar sind. Die Eigenschaften der aus der Beschichtungszusammensetzung herstellbaren Beschichtungen können somit auf einfache Weise durch Variieren der Einzelkomponenten an die jeweiligen Anforderungen angepasst werden. Durch Erhöhen des Anteils an α,ω-funktionellem linearem Oligosiloxan kann die Flexibilität und die Hydrophobie gesteigert werden. Ein erhöhter Anteil an Polykondensationsprodukten von hydrolysierbaren Verbindungen der allgemeinen Formel (II) verbessert die mechanischen Eigenschaften der Beschichtung.

Da die Komponenten (I), (II) und (III) der Beschichtungszusammensetzung hydrolysier- und kondensierbare Gruppen enthalten, unterscheiden sich die Komponenten in der vollständig ausgehärteten Beschichtung in ihrer Struktur und ihrem prozentualen Anteil von der zur Herstellung der Beschichtung eingesetzten Beschichtungszusammensetzung.

Ein weiterer Gegenstand der Erfindung ist ein Verfahren zur Herstellung der erfindungsgemäßen Beschichtungszusammensetzung, dadurch gekennzeichnet, dass im ersten Verfahrensschritt mittels eines Sol-Gel Prozesses ein Polykondensationsprodukt aus hydrolysierbaren Verbindungen der allgemeinen Formel (II) und gegebenenfalls α,ω-hydroxyfunktionellen Polydimethylsiloxanen der allgemeinen Formel (III) in einem OH-funktionellen Lösemittel mit einem Festkörpergehalt von mindestens 40 Gew.-%, bevorzugt von mindestens 50 Gew.-% herstellt wird. Im zweiten Verfahrensschritt wird das im ersten Verfahrensschritt hergestellte Polykondensationsprodukt aus Komponente (II) und gegebenenfalls (III) mit den Komponenten (I), gegebenenfalls (III) und (IV) sowie den weiteren Komponenten (V) und (VI) homogen verrührt.

Multifunktionelle Carbosilane und/oder -siloxane der allgemeinen Formel (I), in denen W zusammengesetzt ist aus mindestens zwei Bausteinen, ausgewählt aus monofunktionellen Einheiten M oder difunktionellen Einheiten D sowie in geringem Maße zusätzlich trifunktionelle Einheiten T oder tetrafunktionelle Einheiten Q und/oder deren Kondensations- und/oder (Teil)kondensationsprodukte sind prinzipiell über zwei Synthesewege zugänglich. Ein Syntheseweg verläuft über Hydrogenfunktionelle Silane oder Siloxane als Ausgangsverbindung W. Im anderen Fall dienen Vinyl-funktionelle Silane oder Siloxane als Ausgangsverbindung W. Geeignete Hydrogen- oder Vinyl-funktionelle Silane und Siloxane sind kommerziell verfügbar oder können durch in der Silicon-Technologie bekannte direkte oder indirekte Hydrolyse- bzw. Äquilibrierungsverfahren aus den geeigneten Silanen oder Siloxanen hergestellt werden. Im Falle einer Hydrogen-funktionellen Ausgangsverbindung W wird die [(CH₂)ₘSiR¹ₙX₍₃₋ₙ₎]-Gruppe gemäß allgemeiner Formel (I) unter Platinkatalyse als entsprechendes alkenylfunktionelles Silan an W addiert. Dient ein Vinyl-funktionelles Silan- oder Siloxan als Ausgangsverbindung W, wird ein entsprechendes Hydrogensilan eingesetzt. Falls erforderlich, kann der Rest X anschließend in einem weiteren Verfahrensschritt durch eine dem Fachmann bekannte direkte oder indirekte Hydrolyse eingeführt werden. Das Prinzip der Synthese wird in EP-A 866086, WO 94/06 807 und DE-A 196 03 241 näher erläutert.

Die Herstellung von multifunktionellen Carbosilanen der allgemeinen Formel (IV) wird in EP-A 743313 beschrieben, multifunktionelle Carbosiloxane der Formel (V) und (VI) sind vorzugsweise nach den in EP-A 866086, DE-A 196 03 241 und WO/98/52992 beschriebenen Verfahren erhältlich.

Die erfindungsgemäße Herstellung des Polykondensationsproduktes aus hydrolysierbaren Verbindungen der allgemeinen Formel (II) erfolgt in der Weise, dass im ersten Verfahrensschritt die hydrolysierbaren Verbindungen der allgemeinen Formel (II) durch Zugabe von Wasser, und Katalysator sowie gegebenenfalls Lösemittel in einer in der Sol-Gel Technologie üblichen Art und Weise hydrolysiert und kondensiert werden. Für die Hydrolyse ist es besonders vorteilhaft, wenn das Molverhältnis von zugesetztem Wasser zu hydrolysierbaren Gruppen Y im Bereich von 0,3 : 1 bis 0,7 : 1, bevorzugt im Bereich von 0,45 : 1 bis 0,55 : 1 liegt. Als Katalysator werden, bezogen auf die Reaktionsmischung, bevorzugt zwischen 250 bis 1000 ppm einer Säure zugesetzt. Nach Beendigung der Reaktion wird das Polykondensationsprodukt mit einer Base neutralisiert und ein OH-funktionelles Lösemittel mit einem Siedepunkt größer 110°C und einem Flammpunkt von mindestens 30°C zugesetzt. Geeignete Lösemittel sind beispielsweise 1-Butanol, 1-Pentanol, 2-Pentanol, 1-Methoxy-2-propanol oder Diacetonalkohol. Anschließend wird bis zum gewünschten Festkörpergehalt von mindestens 40 Gew.-%, bevorzugt von mindestens 50 Gew.-%, destilliert. Das durch die Neutralisation entstandene Salz wird abfiltriert.

Eine weitere Ausführungsform des erfindungsgemäßen Verfahrens ist die Herstellung eines Polykondensationsproduktes aus bevorzugt Alkoxysilanen R²ₐSi(Y)_{(b)} (mit a bevorzugt 0 oder 1 und R², Y die zuvor angegebene Bedeutung haben) oder deren Mischungen, ganz besonders bevorzugt aus Tetraethoxysilan und einem α,ω-hydroxy-funktionelles Polydimethylsiloxan. Es kann die komplette Menge oder nur ein Teil des in der Beschichtungszusammensetzung enthaltenen α,ω-hydroxy-funktionelles Polydimethylsiloxan bei der Herstellung des Polykondensationsproduktes eingesetzt werden. Es ist vorteilhaft, die Mischung aus Alkoxysilanen R²ₐSi(Y)_{(b)} und α,ω-hydroxy-funktionelles Polydimethylsiloxan mit einen Lösemittel, bevorzugt mit Ethanol zu verdünnen. Die Hydrolyse und Kondensation erfolgt auf in der Sol-Gel Technologie üblichen Art und Weise. Es hat sich jedoch als vorteilhaft erwiesen, wenn nach Neutralisation und Zugabe des höher siedenden Lösemittels mindestens 60 Minuten, bevorzugt bei erhöhter Temperatur nachgerührt wird. Die übrigen Verfahrensparameter sowie die Aufarbeitung des Produktes werden durch den Zusatz an α,ω-funktionellen linearen Oligosiloxan nicht verändert.

Überraschenderweise sind die nach dem erfindungsgemäßen Verfahren hergestellten Polykondensationsprodukte aus Alkoxysilanen R²ₐSi(Y)_{(b)} und gegebenenfalls α,ω-hydroxyfunktionellen Polydimethylsiloxanen trotz des hohen Festkörpergehaltes von mindestens 40 Gew.-%, bevorzugt von mindestens 50 Gew.-% klare Lösungen bzw. Dispersionen und bei Raumtemperatur über mehrere Monate lagerfähig.

Im erfindungsgemäßen Herstellverfahren können die in der Beschichtungszusammensetzung enthaltenen Komponenten unmittelbar vor der Applikation miteinander verrührt werden. In einer bevorzugten Ausführungsform des erfindungsgemäßen Verfahrens wird aus den erfindungsgemäßen Komponenten (I) bis (IV) sowie gegebenenfalls weiteren Komponenten (V) und/oder (VI) eine lagerstabile 2K Formulierung hergestellt. In diesem Fall ist es bevorzugt, wenn das multifunktionelle Carbosilan und /oder -siloxan der allgemeinen Formel (I) ein cyclisches Siloxan der allgemeinen Formel (V) ist, in dem X für eine Methoxy- oder Ethoxygruppe steht. Beispielsweise kann aus den Komponenten (I), (II) und (III) eine lagerstabile Mischung hergestellt werden, in die vor der Applikation die Komponente (IV) mittels in der Beschichtungstechnologie üblichen Methoden eingearbeitet wird.

Gegenstand der Erfindung ist weiterhin die Verwendung der erfindungsgemäßen Beschichtungszusammensetzung zur Herstellung von Überzügen auf anorganischen oder organischen Materialien oder Gegenständen. Ebenfalls Gegenstand der Erfindung sind Antihaftschichten, erhalten durch Aufbringen der erfindungsgemäßen Beschichtungszusammensetzung auf anorganische oder organischen Materialien oder Gegenstände um diese wirksam vor Schmutz, Graffiti oder Meeresbewuchs zu schützen.

Oberflächen, beispielsweise an Gebäuden, an Groß- und Schienenfahrzeugen, können wirksam und dauerhaft so ausgerüstet werden, dass sie mit einfachen Mitteln rückstandsfrei und ohne Schädigung des Untergrundes von Graffiti gereinigt werden können. Auf lackierten Oberflächen, wie dies beispielsweise bei Untergrund- und Straßenbahnen oder bei Nahverkehrszügen der Fall ist, kann die erfindungsgemäße Beschichtungszusammensetzung als zusätzliche Schutzschicht auf den Decklack appliziert werden. Auf saugenden mineralischen Untergründen, wie dies beispielsweise häufig bei Gebäuden der Fall ist, kann das Applizieren einer geeigneten Zwischenschicht vorteilhaft sein. Geeignete Zwischenschichten sind beispielsweise die in der Lehre der DE-A 197 15 427 beschriebenen wässrigen 2-Komponenten Polyurethanbindemittel.

Da die Beschichtungszusammensetzung bereits bei Raumtemperatur härtet, können auch Materialien oder Gegenstände beschichtet werden, die keiner erhöhten Temperatur ausgesetzt werden können oder dürfen. Dies ist zum Beispiel bei der Verwendung der erfindungsgemäßen Beschichtungszusammensetzung als Antifoulingbeschichtung oder bei der Verwendung als nicht werkseitig aufgebrachte Antigraffiti-Beschichtung der Fall. Die Beschichtung kann aber auch bei erhöhter Temperatur forciert gehärtet werden.

Nach dem Aushärten der applizierten Beschichtungszusammensetzung ist die zu schützende Oberfläche sehr hydrophob und besitzt gute Antihafteigenschaften. Hierdurch wird erreicht, dass einerseits das Graffiti nicht oder nur schlecht benetzt und somit für den Sprayer an Attraktivität verliert und zweitens sowohl mit Graffitireinigungsmitteln als auch mit Wasser mittels eines Hochdruckreinigers rückstandsfrei entfernt werden kann. Die mit den erfindungsgemäßen Beschichtungszusammensetzungen beschichteten Oberflächen werden des Weiteren wirksam vor Schädigungen durch Lösemittel geschützt, was die Instandhaltungsintervalle verlängert.

Aufgrund des im Vergleich zum Stand der Technik geringen Lösemittelgehaltes kann die Beschichtungszusammensetzung auch in vielen Bereichen angewendet werden, in denen VOC Richtlinien den Lösemittelgehalt beschränken. Die Applikation der erfindungsgemäßen Beschichtungszusammensetzung kann nach den üblichen Methoden, wie Spritzen, Streichen, Tauchen, Fluten, Schleudern oder Rakeln erfolgen.

Anhand der folgenden Beispiele soll die vorliegende Erfindung näher erläutert werden.

Als multifunktionelles Carbosiloxan wird ein analog Beispiel 2 in PCT/98/52992 hergestelltes ethoxyfunktionelles Siloxan eingesetzt.

### Erfindungsgemäße Polykondensationsprodukte

### Beispiel 1

1000 g (4,8 mol) Tetraethoxysilan, gelöst in 400 g Ethanol werden nach Zugabe von 810 ppm HCl und 173 g (9,6 mol) H₂O hydrolysiert und vorkondensiert. Die zunächst trübe Reaktionsmischung erwärmt sich innerhalb weniger Minuten von Raumtemperatur bis auf ca. 65°C und wird klar. Unter Rühren lässt man auf Raumtemperatur abkühlen, neutralisiert die zugesetzte Säure und gibt 400 g n-Butanol zu. Bei reduziertem Druck wird bis 70°C Lösemittel abdestilliert. Nach Filtration fällt das Polykondensationsprodukt als klare Flüssigkeit mit einem Festkörpergehalt von 64,5 Gew.-% an. Für die weitere Verwendung wird mit Butanol auf einen Festkörpergehalt von 50 Gew.-% eingestellt. Das Polykondensationsprodukt ist mehrere Monate bei Raumtemperatur lagerfähig.

### Beispiel 2

Gleiches Vorgehen wie in Beispiel 1 mit dem Unterschied, das nach der Neutralisation n-Pentanol zugesetzt wird. Der Festkörpergehalt des klaren Polykondensationsproduktes liegt bei 48 Gew.-%. Das Polykondensationsprodukt ist mehrere Monate bei Raumtemperatur lagerfähig.

### Beispiel 3

Gleiches Vorgehen wie in Beispiel 1 mit dem Unterschied, das eine Mischung aus 1000 g (4,8 mol) Tetraethoxysilan und 85,7 g (0,48 mol) Methyltriethoxysilan mit 186 g (10,33 mol) H₂O hydrolysiert wird.

### Beispiel 4

Gleiches Vorgehen wie in Beispiel 1 mit dem Unterschied, das eine Mischung aus 1000 g (4,8 mol) Tetraethoxysilan, 68,5 g (0,385 mol) Methyltriethoxysilan und 23,12 g (0,096mol) Phenyltriethoxysilan mit 186 g (10,33 mol) H₂O hydrolysiert wird.

### Beispiel 5

Eine Mischung aus 1000 g (4,8 mol) Tetraethoxysilan und 480 g eines α,ω-hydroxyfunktionellen Polydimethylsiloxans mit einem OH-Gehalt von ca. 7,5 % werden in 400 g Ethanol gelöst und durch Zugabe von 620 ppm HCl und 173 g (9,6 mol) H₂O hydrolysiert und vorkondensiert. Die zunächst trübe Reaktionsmischung erwärmt sich innerhalb weniger Minuten von Raumtemperatur bis auf ca. 65°C. Unter Rühren lässt man auf Raumtemperatur abkühlen, neutralisiert die zugesetzte Säure, setzt 760 g n-Butanol zu und rührt eine weitere Stunde bei 70°C. Bei reduziertem Druck wird bis 70°C Lösemittel abdestilliert. Nach Filtration fällt das Polykondensationsprodukt als klare Flüssigkeit mit einem Festkörpergehalt von 50,7 Gew.-% an. Das Polykondensationsprodukt ist mehrere Monate bei Raumtemperatur lagerfähig.

### Vergleichsbeispiel 1

### (Hydrolysat mit einem α,ω-hydroxyfunktionellen Polydimethylsiloxan mit einem OH-Gehalt außerhalb der Erfindung)

Gleiches Vorgehen wie in Beispiel 5. Statt des α,ω-hydroxyfunktionellen Polydimethylsiloxans mit einem OH-Gehalt von ca. 7,5 % wird die gleiche Menge eines α,ω-hydroxyfunktionellen Polydimethylsiloxans mit einem OH-Gehalt von ca. 0,2 % eingesetzt. Beim Abdestillieren des Lösemittels vergelt der Ansatz und wird fest.

### Erfindungsgemäße Beschichtungszusammensetzungen:

### Beispiel 6

Unter Rühren werden 63,3 Gew.-% des ethoxyfunktionellen Siloxans, hergestellt gemäß Beispiel 2 in WO/98/52992, mit 12,7 Gew.-% Polykondensationsprodukt aus Beispiel 1, 12,7 Gew.-% eines α,ω-hydroxyfunktionellen Polydimethylsiloxans mit einem OH-Gehalt von ca. 7,5 % und 11,3 Gew.-% einer ca. 2 %igen Lösung von para-Toluolsulfonsäure in n-Butanol vermischt. Die Mischung hat einen Lösemittelgehalt von 18 Gew.-% und einen Festkörpergehalt von 61 Gew.-%. Sie wird mit einem Rakel in einer Schichtdicke von 100 µm auf eine Glasplatte aufgetragen und 24 Stunden bei Raumtemperatur getrocknet. Die Beschichtung ist klar. Von einem Permanentmarker der Fa. Edding (Edding 850) wird die Beschichtung nicht benetzt. Der Marker lässt sich 24 Stunden nach Auftragen mit einem Lappen ohne Zuhilfenahme von Reinigungsmittel entfernen.

### Beispiel 7

Gleiches Vorgehen wie in Beispiel 6. Es werden jedoch 53,2 Gew.-% des ethoxyfunktionellen Siloxans, 12,8 Gew.-% eines Polykondensationsproduktes aus Beispiel 1, 10,6 Gew.-% eines α,ω-hydroxyfunktionellen Polydimethylsiloxans mit einem OH-Gehalt von ca. 7,5 %, 1,0 Gew.-% 3-Mercaptopropyltriethoxysilan, 0,3 Gew.-% Byk 306, 3,2 Gew.-% n-Butanol und 18,9 Gew.-% einer ca. 2 %igen Lösung von para-Toluolsulfonsäure in 2-Ethylhexanol vermischt. Die Mischung hat einen Festkörpergehalt von 54 Gew.-%.

### Beispiel 8

Gleiches Vorgehen wie in Beispiel 6. Es werden jedoch 53,7 Gew.-% des ethoxyfunktionellen Siloxans, 40,3 Gew.-% Polykondensationsprodukt aus Beispiel 5 und 6 Gew.-% einer ca. 2 %igen Lösung von para-Toluolsulfonsäure in n-Butanol miteinander vermischt. Die Mischung hat einen Lösemittelgehalt von 26 Gew.-% und einen Festkörpergehalt von 55,5 Gew.-%. Die Beschichtung ist klar. Von einem Permanentmarker der Fa. Edding (Edding 850) wird die Beschichtung nicht benetzt. Der Marker lässt sich 24 Stunden nach Auftragen mit einem Lappen ohne Zuhilfenahme von Reinigungsmittel entfernen.

### Beispiel 9

Gleiches Vorgehen wie in Beispiel 6. Es werden jedoch 57,4 Gew.-% des ethoxyfunktionellen Siloxans, 30,9 Gew.-% Polykondensationsprodukt aus Beispiel 5 und 11,7 Gew.-% einer ca. 2 %igen Lösung von para-Toluolsulfonsäure in n-Butanol miteinander vermischt. Die Mischung hat einen Lösemittelgehalt von 27 Gew.-% und einen Festkörpergehalt von 53,3 Gew.-%. Die Beschichtung ist klar. Von einem Permanentmarker der Fa. Edding (Edding 850) wird die Beschichtung nicht benetzt. Der Marker lässt sich 24 Stunden nach Auftragen mit einem Lappen ohne Zuhilfenahme von Reinigungsmittel entfernen.

### Beispiel 10

Gleiches Vorgehen wie in Beispiel 6. Es werden jedoch 22,5 Gew.-% des ethoxyfunktionellen Siloxans, 67,4 Gew.-% Polykondensationsprodukt aus Beispiel 5 und 10,1 Gew.-% einer ca. 2 %igen Lösung von para-Toluolsulfonsäure in n-Butanol miteinander vermischt. Die Mischung hat einen Lösemittelgehalt von 44 Gew.-% und einen Festkörpergehalt von 49 Gew.-%. Die Beschichtung ist klar. Von einem Permanentmarker der Fa. Edding (Edding 850) wird die Beschichtung nicht benetzt. Der Marker lässt sich 24 Stunden nach Auftragen mit einem Lappen ohne Zuhilfenahme von Reinigungsmittel entfernen.

### Beispiel 11

Gleiches Vorgehen wie in Beispiel 6. Es werden jedoch 48,2 Gew.-% des ethoxyfunktionellen Siloxans, 11,6 Gew.-% Polykondensationsprodukt aus Beispiel 5, 38,6 Gew.-% eines α,ω-hydroxyfunktionellen Polydimethylsiloxans mit einem OH-Gehalt von ca. 7,5 % und 1,6 Gew.-% einer ca. 2 %igen Lösung von para-Toluolsulfonsäure in n-Butanol miteinander vermischt. Die Mischung hat einen Lösemittelgehalt von 7,5 Gew.-% und einen Festkörpergehalt von 76 Gew.-%. Die Beschichtung ist klar. Von einem Permanentmarker der Fa. Edding (Edding 850) wird die Beschichtung nicht benetzt. Der Marker lässt sich 24 Stunden nach Auftragen mit einem Lappen ohne Zuhilfenahme von Reinigungsmittel entfernen.

### Vergleichsbeispiel 2

### (Beschichtungszusammensetzung ohne ein eines α,ω-hydroxyfunktionelles Polydimethylsiloxan)

Gleiches Vorgehen wie in Beispiel 6. Es werden jedoch 30,8 Gew.-% des ethoxyfunktionellen Siloxans, 55,4 Gew.-% Polykondensationsprodukt aus Beispiel 1 und 13,8 Gew.-% einer ca. 2 %igen Lösung von para-Toluolsulfonsäure in n-Butanol miteinander vermischt. Die Mischung hat einen Lösemittelgehalt von 41,5 Gew.-% und einen Festkörpergehalt von 48 Gew.-%. 24 h nach Applikation ist eine deutliche Rissbildung zu beobachten.

### Vergleichsbeispiel 3

### (Beschichtungszusammensetzung mit einem α,ω-hydroxyfunktionellen Polydimethylsiloxan mit einem OH-Gehalt außerhalb der Erfindung)

Gleiches Vorgehen wie in Beispiel 6. Es werden jedoch statt eines α,ω-hydroxyfunktionellen Polydimethylsiloxans mit einem OH-Gehalt von ca. 7,5 % die gleiche Menge eines α,ω-hydroxyfunktionellen Polydimethylsiloxans mit einem OH-Gehalt von ca. 0,1 % eingesetzt. Die Mischung ist unverträglich.

### Vergleichsbeispiel 4

### (Beschichtungszusammensetzung ohne ein multifunktionelles Carbosilan und/oder - siloxan)

Unter Rühren werden 20 Gew.-% Polykondensationsprodukt aus Beispiel 1, 75 Gew.-% Polykondensationsprodukt aus Beispiel 5, 5,0 Gew.-% einer ca. 2 %igen Lösung von para-Toluolsulfonsäure in n-Pentanol miteinander vermischt. Die Mischung hat einen Lösemittelgehalt von 52,5 Gew.-% und einen Festkörpergehalt von 47,5 Gew.-%. 24 h nach Applikation ist eine deutliche Rissbildung zu beobachten

### Vergleichsbeispiel 5

### (Beschichtungszusammensetzung ohne ein multifunktionelles Carbosilan und/oder - siloxan)

Unter Rühren werden 87 Gew.-% Polykondensationsprodukt aus Beispiel 1, 4,4 Gew.-% eines α,ω-hydroxyfunktionellen Polydimethylsiloxans mit einem OH-Gehalt von ca. 7,5 % und 8,6 Gew.-% einer ca. 2 %igen Lösung von para-Toluolsulfonsäure in n-Pentanol miteinander vermischt. Die Mischung hat einen Lösemittelgehalt von 52,2 Gew.-% und einen Festkörpergehalt von 47,8 Gew.-%. 24 h nach Applikation ist eine deutliche Rissbildung zu beobachten.

Beschichtungszusammensetzung zur Ausrüstung von Oberflächen zwecks **Graffiti-Schutz**

### Vergleichsbeispiel 6

Als Vergleich dient ein hochwertiger wässriger 2K PUR Decklack, der in der Großund Schienenfahrzeuglackierung eingesetzt wird.

| | | |
|---|---|---|
| 1. | Polyol | 43,3 Gew.-% Bayhydrol VPLS 2235/1 |
| 2. | Polyisocyanat | 13,3 Gew.-% Bayhydur VPLS 2319 |
| 3. | Pigmente | 13,4 Gew.-% |
| 4. | Additive und Lösemittel | 29,9 Gew.-% |

### Zu 1 (Polyol):

Polyacrylatdispersion, 45 %ig in Wasser/Solventnaphta 100/2-Butoxyethanol, neutralisiert mit Dimethylethanolamin, Verhältnis ca. 45,6:4:4:1,4, OH-Gehalt: 3,3 % bezogen auf Festharz.

### Zu 2 (Polyisocyanat):

Hydrophiliertes, aliphatisches Polyisocyanat auf Basis Hexamethylendiisocyanat, 100 %ig, NCO-Gehalt 18,0 %.

### Zu 3 (Pigmente):

1,7 Gew.-% Irgazinrot BO (Ciba Specialty Chemicals/Basel), 2,5 Gew.-% Paliogenorange L 2930 HD (BASF AG/Ludwigshafen), 4,2 Gew.-% Sicopalgelb L 1600 (BASF AG/Ludwigshafen), 5,0 Gew.-% Blancfixe M (Sachtleben Chemie GmbH/Duisburg)

### Zu 4 (Additive und Lösemittel):

1,0 Gew.-% Surfynol 104, 50 %ig in Butylglykol (Air Products Nederland BV/Utrecht), 0,1 Gew.-% Borchigel PW 25, 25 %ig in Propylenglykol/Wasser (Borchers GmbH/Monheim), 1,0 Gew.-% Baysilone VPAI 3468:3466 (3:7, 10 %ig in Butoxyl) (Borchers GmbH/Monheim), 2,0 Gew.-% Borchigen SN 95 (25 %ig in Wasser) (Borchers GmbH/Monheim), 22,4 Gew.-% VE-Wasser, 3,4 Gew.-% Butoxyl.

### Beispiel 12

Beurteilung der Auslaufzeit im DIN4-Becher der applikationsfertigen Beschichtungszusammensetzung aus Beispiel 7:

| Zeit nach Vermischung | 2K PUR wässrig (Vergleichsbeispiel 6) | Beschichtungszusammensetzung aus Beispiel 7 |
|---|---|---|
| 0 h | 26 sec. | 12 sec. |
| 1 h | 31 sec. | 12 sec. |
| 2 h | 34 sec. | 12 sec. |
| 3 h | 40 sec. | 12 sec. |
| 6 h | --- | 12 sec. |
| 24 h | --- | 13 sec. |

Die Beschichtungszusammensetzung aus Beispiel 7 zeigt im Vergleich zu Standardbeschichtungssystemen für Groß- und Schienenfahrzeuge eine sehr lange Verarbeitungszeit.

### Beispiel 13

Prüfung der Trocknung bei Raumtemperatur (DIN 53150)

| Trockengrad | 2K PUR wässrig (Vergleichsbeispiel 6) | Beschichtungszusammensetzung aus Beispiel 7 |
|---|---|---|
| T 1 | 1 h | 6 min. |
| T 3 | 7 h | 12 min. |
| Filmschichtstärke | 40 µm | 30 µm |

Die Beschichtungszusammensetzung aus Beispiel 7 zeigt im Vergleich zu Standardbeschichtungssystemen für Groß- und Schienenfahrzeuge eine sehr schnelle Trocknung.

### Beispiel 14

Die gemäß Beispiel 7 und Vergleichsbeispiel 6 formulierten Lacke werden mittels Luftdrucksprühapplikation (Düse 1,3 mm Durchmesser, Spritzdruck 3,5 bar) auf Glasplatten oder Stahlbleche, die mit einer Grundierung bzw. einem Unidecklack beschichtet sind, aufgebracht.

Resultierende Trockenfilmschichtstärke:
- Beschichtungszusammensetzung aus Beispiel 7: ca. 20 µm
- Wässriger 2K PUR Decklack aus Vergleichsbeispiel 6: ca. 50 µm

### Beispiel 15

Prüfung auf Lösemittelbeständigkeit der in Beispiel 14 applizierten Lacke (VDA 621-412, 10 min. Einwirkzeit)

| Lösemittel | 2K PUR wässrig (Vergleichsbeispiel 6) | Beschichtungszusammensetzung aus Beispiel 7 |
|---|---|---|
| Superbenzin | 2 | 0 |
| Xylol | 5 | 3 |
| Methoxypropylacetat | 5 | 2 |

- Bewertung:: 0= Lackfilm unverändert
5= stark angequollen

Im Vergleich zu Standardbeschichtungssystemen für Groß- und Schienenfahrzeuge, kann die Beschichtungszusammensetzung aus Beispiel 7 die zu schützende Oberfläche wirksam vor Schädigungen durch Lösemittel bewahren.

### Beispiel 16

### Prüfung der Antigraffitieigenschaften

Auf die gemäß Beispiel 14 beschichteten Substrate werden Alkydspraylack, Acrylspraylack und Filzschreiber aufgetragen und anschließend 48 h Lagerung bei 50°C gelagert, um eine Alterung des Graffitis zu simulieren. Zur Überprüfung der Reinigungsfähigkeit wird Dekontaminol, ein kommerziell verfügbares Graffitireinigungsmittel, aufgetragen. Nach 10 Minuten. Einwirkzeit wird das Dekontaminol mit einem Tuch abgerieben.

| Ergebnis: | | |
|---|---|---|
| Auftragsmittel | 2K PUR wässrig (Vergleichsbeispiel 6) | Beschichtungszusammensetzung aus Beispiel 7 |
| Alkydspraylack | 4 | 0 |
| Acrylspraylack | 2 | 0 |
| Filzschreiber | 0 | 0 |

- Grad der Entfernung:: 0= vollständig entfernt
5= unverändert

Im Vergleich zu Standardbeschichtungssystemen für Groß- und Schienenfahrzeuge, können Oberflächen mit dem erfindungsgemäßen Verfahren wirksam und dauerhaft so ausgerüstet werden, dass Graffiti mit einfachen Mitteln rückstandsfrei und ohne Schädigung des Untergrundes entfernt werden kann. Daneben besitzt das erfindungsgemäße Verfahren weitere anwendungstechnische Vorteile, wie schnelle Trocknung und langes Potlife.

## Patentansprüche

1. Beschichtungszusammensetzung, mindestens enthaltend
I) ein multifunktionelles Carbosilan und/oder -siloxan der allgemeinen Formel (I),
W[(CH₂)ₘSiR¹ ₙX₍₃₋ₙ₎]ₚ (I)
und/oder dessen (Teil)kondensationsprodukt mit
R¹ C₁ - C₁₈-Alkyl und/oder C₆ - C₂₀-Aryl, wobei R¹ innerhalb des Moleküls gleich oder ungleich sein kann,
X ein Rest ausgewählt aus der Gruppe OH, C₁ - C₄-Alkoxy, C₆-C₂₀-Aryloxy, C₁ - C₆-Acyloxy,
n 0 bis 2
m 2 bis 6
p ganze Zahl ≥ 2 und
W entweder ein lineares oder cyclisches Silan oder Siloxan,
II) ein Polykondensationsprodukt einer oder mehrerer hydrolysierbarer Verbindungen der allgemeinen Formel (II)
R² ₐM(Y)_{(b)} (II)
mit
M Si, B, Al, Ti, Zr, V, Zn,
R² gleiche oder verschiedene nicht hydrolysierbare C₁ - C₁₄-Alkyl- oder C₆ - C₂₀-Arylreste, die mit mindestens einem Mitglied der Gruppe O, N, S, P substituiert sein können,
Y eine hydrolysierbare Gruppe,
a 0 bis 3,
b 1 bis 4, wobei a + b gleich 3 oder 4
und einem Festkörpergehalt von mindestens 40 Gew.-%, in einem OH-funktionellen Lösemittel,
III) ein α,ω-hydroxyfunktionelles Polydimethylsiloxan der Formel (III) 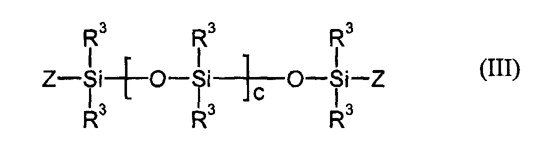 mit
Z Hydroxy,
R³ Methyl,
c 1 bis 60,
mit einem OH-Gehalt von 0,8 bis 9 %,
IV) Katalysatoren, ausgewählt aus der Gruppe der sauren, basischen oder Metall-Katalysatoren, bevorzugt aus der Gruppe der Säuren, wie Salzsäure, Schwefelsäure, p-Toluolsulfonsäure, Trifluoressigsäure, Trifluormethansulfonsäure, Essigsäure oder Ameisensäure,
sowie gegebenenfalls
V) anorganische Füllstoffe und/oder organische Nanoteilchen, sowie
VI) Hilfsstoffe, ausgewählt aus der Gruppe anorganischer und/oder organischer Pigmente, Lackadditive, Haftmittel, Fungizide, Bakterizide, Stabilisatoren oder Inhibitoren.

2. Beschichtungszusammensetzung nach Anspruch 1, **dadurch gekennzeichnet, dass** das multifunktionelle Carbosilan und/oder -siloxan der allgemeinen Formel (I) ein cyclisches Siloxan der allgemeinen Formel (V) 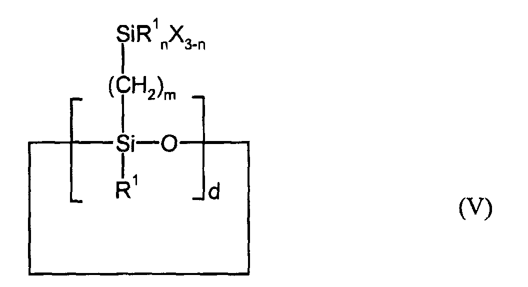 und/oder dessen (Teil)kondensationsprodukt
mit
R¹ C₁ - C₁₈-Alkyl und/oder C₆ - C₂₀-Aryl, wobei R¹ innerhalb des Moleküls gleich oder ungleich sein kann,
X ein Rest ausgewählt aus der Gruppe OH, C₁ - C₄-Alkoxy, C₆ - C₂₀-Aryloxy, C₁ - C₆-Acyloxy,
d 3 bis 6,
n 0 bis 2
m 2 bis 6
ist.

3. Beschichtungszusammensetzung nach einem oder mehreren der Ansprüche 1 bis 2, **dadurch gekennzeichnet, dass** das multifunktionelles Carbosilan und/oder -siloxan der allgemeinen Formel (I), eine Verbindung der Formel (VI) und/oder (VII) 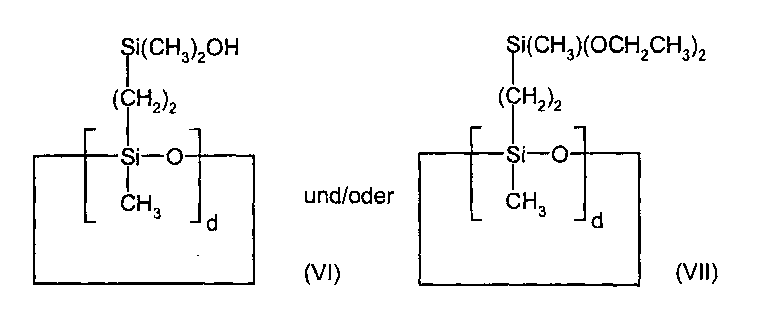 oder deren (Teil)kondensationsprodukt
mit d gleich 3 bis 6,
ist.

4. Beschichtungszusammensetzung nach einem oder mehreren der Ansprüche 1 bis 3, **dadurch gekennzeichnet, dass** die hydrolysierbaren Verbindungen der allgemeinen Formel (II) hydrolysierbare Verbindungen mit M gleich Silizium und a gleich 0 oder 1 sind.

5. Beschichtungszusammensetzung nach einem oder mehreren der Ansprüche 1 bis 4, **dadurch gekennzeichnet, dass** die hydrolysierbaren Verbindungen der allgemeinen Formel (II) Tetraethoxysilan, Methyltriethoxysilan und/oder Phenyltriethoxysilan sind.

6. Beschichtungszusammensetzung nach einem oder mehreren der Ansprüche 1 bis 5 **dadurch gekennzeichnet, dass** das α,ω hydroxy-funktionelle lineare Polydimethylsiloxan ganz oder teilweise in das Polykondensationsprodukt einer oder mehrerer hydrolysierbarer Verbindungen der allgemeinen Formel (II) eingebaut ist.

7. Beschichtungszusammensetzung nach einem oder mehreren der Ansprüche 1 bis 6 **dadurch gekennzeichnet, dass** die Beschichtungszusammensetzung zusammengesetzt ist aus
I) 20 bis 70 Gew.-% eines multifunktionellen Carbosilans und/oder - siloxans der allgemeinen Formel (I),
II) 10 bis 70 Gew.-% eines Polykondensationsproduktes einer oder mehrerer hydrolysierbarer Verbindungen der allgemeinen Formel (II), und/oder Methyltriethoxysilan und/oder Phenyltriethoxysilan mit einen Festkörpergehalt von mindestens 40 Gew.-%, in einem OH-funktionellen Lösemittel, wobei das Polykondensationsprodukt auch α,ω-funktionelle lineare Oligosiloxane enthalten kann,
III) 5 bis 50 Gew.-% eines α,ω-hydroxyfunktionellen linearen Polydimethylsiloxans der allgemeinen Formel (III), wobei dieses ganz oder teilweise in dem Polykondensationsprodukt aus einer oder mehreren hydrolysierbaren Verbindungen der allgemeinen Formel (II) enthalten sein kann,
IV) 0,5 bis 20 Gew.-% einer Katalysatorlösung, gelöst in einem organischen Lösemittel,
mit der Maßgabe, dass die Summe der einzelnen Komponenten 100 Gew.-% ergibt,
sowie gegebenenfalls
V) anorganische Füllstoffe und/oder organische Nanoteilchen, sowie
VI) Hilfsstoffe, ausgewählt aus der Gruppe anorganischer und/oder organischer Pigmente, Lackadditive, Haftmittel, Fungizide, Bakterizide, Stabilisatoren oder Inhibitoren.

8. Verfahren zur Herstellung der Beschichtungszusammensetzung nach einem oder mehreren der Ansprüche 1 bis 7, **dadurch gekennzeichnet, dass** in einem ersten Verfahrensschritt mittels eines Sol-Gel Prozesses ein Polykondensationsprodukt aus hydrolysierbaren Verbindungen der allgemeinen Formel (II) und gegebenenfalls α,ω-hydroxyfunktionellen linearen Polydimethylsiloxanen der allgemeinen Formel (III) in einem OH-funktionellen Lösemittel mit einem Festkörpergehalt von mindestens 40 Gew.-%, hergestellt wird und in einem zweiten Verfahrensschritt das im ersten Verfahrensschritt hergestellte Polykondensationsprodukt aus Komponente (II) und gegebenenfalls (III) mit den Komponenten (I), gegebenenfalls weiterer Komponente (III) und (IV) sowie gegebenenfalls den Komponenten (V) und (VI) homogen verrührt wird.

9. Verwendung der Beschichtungszusammensetzung nach einem oder mehreren der Ansprüche 1 bis 7 zur Herstellung von Überzügen auf anorganischen oder organischen Materialien und Gegenständen.

10. Antihaftschicht, hergestellt durch Aufbringen der Beschichtungszusammensetzung nach einem oder mehreren der Ansprüche 1 bis 7 auf anorganische oder organische Materialien und Gegenstände.

11. Antihaftschicht, nach Anspruch 10, **dadurch gekennzeichnet, dass** Oberflächen von Gebäuden sowie Groß- und Schienenfahrzeuge vor Schmutz, Graffiti oder Meeresbewuchs wirksam geschützt sind.

## Claims

1. Coating composition at least comprising
I) a multifunctional carbosilane and/or carbosiloxane of general formula (I)
W[(CH₂)ₘSiR¹ ₙX₍₃₋ₙ₎]ₚ (I)
and/or its (partial) condensation product
wherein
R¹ is C₁ - C₁₈ alkyl and/or C₆ - C₂₀ aryl, it being possible for R¹ to be the same or different within the molecule,
X is a radical selected from the group consisting of OH, C₁ - C₄ alkoxy, C₆ - C₂₀ aryloxy and C₁ - C₆ acyloxy,
n is 0 to 2,
m is 2 to 6,
p is an integer ≥ 2 and
W is either a linear or cyclic silane or siloxane,
II) a polycondensation product of one or more hydrolysable compounds of general formula (II)
R² ₐM(Y)_{(b)} (II)
wherein
M is Si, B, Al, Ti, Zr, V or Zn,
R² is the same or different at each occurrence and represents non-hydrolysable C₁ - C₁₄ alkyl or C₆ - C₂₀ aryl radicals which may substituted by at least one member of the group O, N, S and P,
Y is a hydrolysable group,
a is 0 to 3,
b is 1 to 4, a + b being 3 or 4,
with a solids content of at least 40% by weight, in an OH-functional solvent,
III) an α,ω-hydroxy-functional polydimethylsiloxane of formula (III) 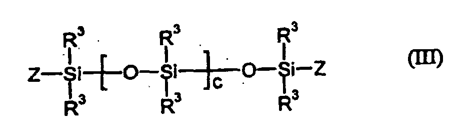 wherein
Z is hydroxyl,
R³ is methyl,
c is 1 to 60,
having an OH content of from 0.8 to 9%,
IV) catalysts selected from the group consisting of acidic, basic and metal catalysts, preferably from the group of the acids, such as hydrochloric acid, sulphuric acid, p-toluenesulphonic acid, trifluoroacetic acid, trifluoromethanesulphonic acid, acetic acid or formic acid,
and optionally
V) inorganic fillers and/or organic nano-particles, and
VI) auxiliaries selected from the group consisting of organic and/or inorganic pigments, coatings additives, adhesion agents, fungicides, bactericides, stabilizers and inhibitors.

2. Coating according to Claim 1, **characterized in that** the multifunctional carbosilane and/or carbosiloxane of general formula (I) is a cyclic siloxane of general formula (V) 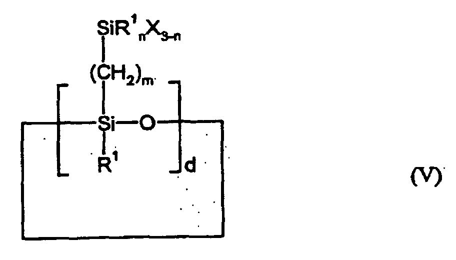 and/or its (partial) condensation product
wherein
R¹ is C₁ - C₁₈ alkyl and/or C₆ - C₂₀ aryl, it being possible for R¹ to be the same or different within the molecule,
X is a radical selected from the group consisting of OH, C₁ - C₄ alkoxy, C₆ - C₂₀ aryloxy and C₁ - C₆ acyloxy,
d is 3 to 6,
n is 0 to 2,
m is 2 to 6.

3. Coating composition according to one or more of Claims 1 to 2, **characterized in that** the multifunctional carbosilane and/or carbosiloxane of general formula (I) is a compound of formula (VI) and/or (VII) 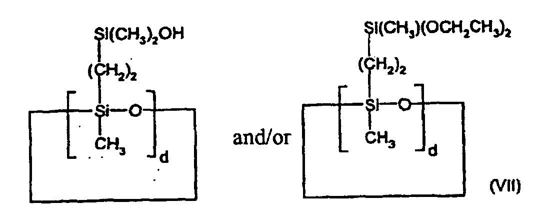 or a (partial) condensation product thereof
wherein d is 3 to 6.

4. Coating composition according to one or more of Claims 1 to 3, **characterized in that** the hydrolysable compounds of general formula (II) are hydrolysable compounds wherein M is silicon and a is 0 or 1.

5. Coating composition according to one or more of Claims 1 to 4, **characterized in that** the hydrolysable compounds of general formula (II) are tetraethoxysilane, methyltriethoxysilane and/or phenyltriethoxysilane.

6. Coating composition according to one or more of Claims 1 to 5, **characterized in that** the α,ω-hydroxy-functional linear polydimethylsiloxane is wholly or partially incorporated into the polycondensation product of one or more hydrolysable compounds of general formula (II).

7. Coating composition according to one or more of Claims 1 to 6, **characterized in that** the coating composition is composed of
(I) 20 to 70 wt. % of a multifunctional carbosilane and/or carbosiloxane of general formula (I),
(II) 10 to 70 wt. % of a polycondensation product of one or more hydrolysable compounds of general formula (II), and/or methyltriethoxysilane and/or phenyltriethoxysilane, with a solids content of at least 40 wt. %, in an OH-functional solvent, where the polycondensation product may also contain α,ω-functional linear oligosiloxanes,
(III) 5 to 50 wt. % of an α,ω-hydroxy-functional linear polydimethylsiloxane of general formula (III), which may be wholly or partly contained in the polycondensation product formed from one or more hydrolysable compounds of general formula (II),
IV) 0.5 to 20 wt. % of a catalyst solution dissolved in an organic solvent,
with the proviso that the sum of the individual components makes 100 wt. %,
and optionally
V) inorganic fillers and/or organic nano-particles, and
VI) auxiliaries selected from the group consisting of organic and/or inorganic pigments, coatings additives, adhesion agents, fungicides, bactericides, stabilizers and inhibitors.

8. Process for production of the coating composition according to one or more of Claims 1 to 7, **characterized by** producing in a first process step a polycondensation product formed from hydrolysable compounds of general formula (II) and optionally α,ω-hydroxy-functional linear polydimethylsiloxanes of general formula (III) in an OH-functional solvent with a solids content of at least 40 wt. % by a solution-gel process and in a second process step homogeneously stirring the polycondensation product produced in the first process step from component (II) and optionally (III) with components (I), optionally further component (III) and (IV) and also optionally components (V) and (VI).

9. Use of the coating composition according to one or more of Claims 1 to 7 for producing coatings on organic or inorganic materials and articles.

10. Non-stick layer produced by applying the coating composition according to one or more of Claims 1 to 7 to organic or inorganic materials and articles.

11. Non-stick layer, according to Claim 10, **characterized in that** surfaces of buildings and also large vehicles and rail vehicles are effectively protected against dirt, graffiti or marine fouling.

## Revendications

1. Composition de revêtement, contenant au moins
I) un carbosilane et/ou -siloxane multifonctionnel de la formule générale (I) :
W[(CH₂)ₘSiR¹ ₙX₍₃₋ₙ₎]ₚ (I)
et/ou ses produits de condensation (partielle), avec
R¹ radical alcoyle en C₁-C₁₈ et/ou aryle en C₆-C₂₀, où R¹ peut être identique ou différent au sein de la molécule,
X un reste choisi parmi le groupe du radical OH, radical alcoxy en C₁-C₄, aryloxy en C₆-C₂₀, alcyloxy en C₁-C₆,
n 0 à 2,
m 2 à 6,
p un nombre entier ≥ 2, et
W un silane ou siloxane linéaire ou cyclique,
II) un produit de polycondensation d'un ou de plusieurs composés hydrolysables de la formule générale (II) :
R² ₐM(Y)_{b} (II)
avec
M Si, B, Al, Ti, Zr, V, Zn,
R² restes alcoyle en C₁-C₁₄ ou aryle en C₆-C₂₀ identiques ou différents, non hydrolysables, qui peuvent être substitué par au moins un membre du groupe O, N, S, P,
Y un radical hydrolysable,
a 0 à 3,
b 1 à 4, où a + b est égal à 3 ou 4,
et une teneur en matière solide d'au moins 40% en poids, dans un solvant à fonction OH,
III) un polydiméthylsiloxane à fonctions α,ω-hydroxy, de la formule (III) : 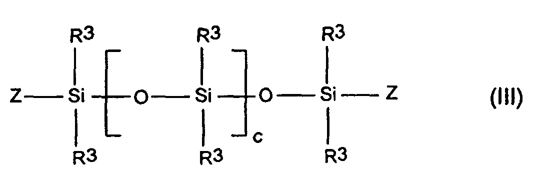 avec
Z hydroxy,
R³ méthyle,
c 1 à 60,
avec une teneur en OH de 0,8 à 9%,
IV) des catalyseurs, choisi parmi le groupe des catalyseurs acides, basiques ou métalliques, de préférence parmi le groupe des acides, comme l'acide chlorhydrique, l'acide sulfurique, l'acide p-toluènesulfonique, l'acide trifluoroacétique, l'acide trifluorométhanesulfonique, l'acide acétique ou l'acide formique,
ainsi que le cas échéant,
V) des charges inorganiques et/ou des nanoparticules organiques, ainsi que
VI) des auxiliaires, choisis parmi le groupe des pigments inorganiques et/ou organiques, des additifs de laques et vernis, des agent d'adhérence, des fongicides, des bactéricides, des stabilisants ou des inhibiteurs.

2. Composition de revêtement selon la revendication 1, **caractérisée en ce que** le carbosilane et/ou -siloxane multifonctionnel de la formule générale (I) est un siloxane cyclique de la formule générale (V) : 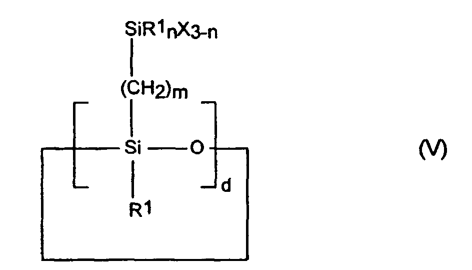 et/ou ses produits de condensation (partielle), avec
R¹ radical alcoyle en C₁-C₁₈ et/ou aryle en C₆-C₂₀, où R¹ peut être identique ou différent au sein de la molécule,
X un reste choisi parmi le groupe du radical OH, radical alcoxy en C₁-C₄, aryloxy en C₆-C₂₀, alcyloxy en C₁-C₆,
d 3 à 6,
n 0 à 2,
m 2 à 6.

3. Composition de revêtement selon une ou plusieurs des revendications 1 à 2, **caractérisée en ce que** le carbosilane et/ou -siloxane multifonctionnel de la formule générale (I) est un composé de la formule (VI) et/ou (VII) : 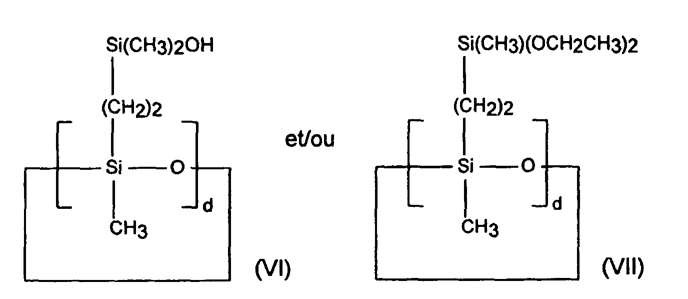 ou leurs produits de condensation (partielle),
avec d est égal à 3 à 6.

4. Composition de revêtement selon une ou plusieurs des revendications 1 à 3, **caractérisée en ce que** les composés hydrolysables de la formule générale (II) sont des composés hydrolysables avec M qui est le silicium et a est égal à 0 ou 1.

5. Composition de revêtement selon une ou plusieurs des revendications 1 à 4, **caractérisée en ce que** les composés hydrolysables de la formule générale (II) sont le tétraéthoxysilane, le méthyltriéthoxysilane et/ou le phényltriéthoxysilane.

6. Composition de revêtement selon une ou plusieurs des revendications 1 à 5, **caractérisée en ce que** polydiméthylsiloxane linéaire à fonctions α,ω-hydroxy est incorporé complètement ou partiellement dans le produit de polycondensation d'un ou de plusieurs composés hydrolysables de la formule générale (II).

7. Composition de revêtement selon une ou plusieurs des revendications 1 à 6, **caractérisée en ce** la composition de revêtement est composée de
I) 20 à 70% en poids d'un carbosilane et/ou - siloxane multifonctionnel de la formule générale (I),
II) 10 à 70% en poids d'un produit de polycondensation d'un ou de plusieurs composés hydrolysables de la formule générale (II), et/ou du méthyltriéthoxysilane et/ou du phényltriéthoxysilane avec une teneur en matières solides d'au moins 40% en poids, dans un solvant à fonction OH, où le produit de polycondensation peut également contenir un oligosiloxane linéaire à fonctions α,ω,
III) 5 à 50% en poids d'un polydiméthylsiloxane linéaire à fonctions α,ω-hydroxy de la formule générale (III), où celui-ci peut être contenu complètement ou partiellement, dans le produit de polycondensation d'un ou de plusieurs composés hydrolysables de la formule générale (II),
IV) 0,5 à 20% en poids d'une solution de catalyseur, dissoute dans un solvant organique,
avec la condition que la somme des composants individuels donne 100% en poids, ainsi que le cas échéant,
V) des charges inorganiques et/ou des nanoparticules organiques, ainsi que
VI) des auxiliaires, choisis parmi le groupe des pigments inorganiques et/ou organiques, des additifs de laques et vernis, des agent d'adhérence, des fongicides, des bactéricides, des stabilisants ou des inhibiteurs.

8. Procédé de préparation de la composition de revêtement selon l'une ou plusieurs des revendications 1 à 7, **caractérisé en ce que** dans une première étape de procédé, on prépare par un processus sol-gel, un produit de polycondensation des composés hydrolysables de la formule générale (II) et le cas échéant, des polydiméthylsiloxanes linéaires à fonctions α,ω-hydroxy de la formule générale (III) dans un solvant à fonction OH, avec une teneur en matière solide d'au moins 40% en poids et dans une deuxième étape du procédé, on mélange de manière homogène, le produit de polycondensation préparé à la première étape du procédé, des composants (II) et le cas échéant, des composants (III), avec les composants (I), le cas échéant d'autres composants (III) et (IV), ainsi que le cas échéant, les composants (V) et (VI).

9. Utilisations de la composition de revêtement selon l'une ou plusieurs des revendications 1 à 7, pour la préparation de revêtements sur des matériaux et objets inorganiques ou organiques.

10. Couche anti-adhérente, préparée par application de la composition de revêtement selon l'une ou plusieurs des revendications 1 à 7, sur des matériaux et objets inorganiques ou organiques.

11. Couche anti-adhérente selon la revendication 10, **caractérisée en ce que** les surfaces de bâtiments ainsi que de grands véhicules et véhicules sur rails, sont activement protégées contre la salissure, les graffitis ou la salissure marine.
